# EUROPÄISCHE PATENTSCHRIFT

(11) **EP 1 172 195 B1**
(45) Veröffentlichungstag und Bekanntmachung des Hinweises auf die Patenterteilung: **23.04.2003**
(21) Anmeldenummer: 00114667.9
(22) Anmeldetag: 07.07.2000
(51) Int. Cl.: B29C 47/78, B29C 47/00, A21C 1/00

(54) **Verfahren zur Herstellung von Granulat und Extruder**
Method of producing granules and extruder
Procédé de fabrication de granulés et extrudeuse

(43) Veröffentlichungstag der Anmeldung: 16.01.2002
(73) Patentinhaber: Lihotzky-Vaupel, Wolfram, 94557 Niederalteich (DE)
(72) Erfinder: Lihotzky-Vaupel, Wolfram, 94557 Niederalteich (DE)
(74) Vertreter: Wunderlich, Rainer, Dipl.-Ing.

(56) Entgegenhaltungen:
- EP-A- 0 166 820
- EP-A- 0 612 559
- EP-A- 0 707 935
- EP-A- 0 919 127
- DE-A- 19 833 543
- US-A- 5 417 992

## Beschreibung

Die Erfindung betrifft ein Verfahren zur Herstellung von Granulat nach dem Oberbegriff des Anspruchs 1. Weiterhin betrifft die Erfindung einen Extruder zur Durchführung dieses Verfahrens nach dem Oberbegriff des Anspruchs 8.

Ein gattungsbildender Stand der Technik ist aus der EP 0 612 559 A bekannt. Hierin ist eine Extrusionsmaschine beschrieben, an deren Materialaustrittsöffnung ein Formwerkzeug und ein zugeordnetes Schneidwerkzeug zur Granulierung angeordnet sind. Über eine Wechslervorrichtung können Formwerkzeug und/oder Schneidwerkzeug effizient ohne Betriebsunterbrechung gewechselt werden.

Extrusionsverfahren werden auf den vielfältigsten Gebieten der Technik eingesetzt, da die Extrusion eines der effizientesten Verfahren zur Verarbeitung und Formgebung plastischer Massen ist. Voraussetzung für viele Extrusionsanwendungen ist, dass die zu extrudierende Mischung im Extruder ausreichend plastische Eigenschaften aufweist, während nach Austritt aus dem Extruder eine möglichst schnelle Formstabilität gewünscht ist.

Probleme bei der Extrusion von Materialien entstehen insbesondere dann, wenn das Extrudat nach Austritt aus einem Formwerkzeug des Extruders noch nicht ausreichend formstabil ist, so dass eine Granulierung kaum oder erst nach einer aufwendigen Trocknung und Verfestigung in einem zwischengeschalteten Verfahrensschritt durchführbar ist. Dieses Problem gilt insbesondere für Materialmischungen, welche in ihrem noch nicht formstabilen Zustand eine stark adhäsive Wirkung besitzen. Derartige Materialmischungen, beispielsweise bestimmte aufgeschmolzene Polymere oder chemische Rezepturen, können dann beispielsweise nicht unmittelbar zu Granulat abgelängt werden, da diese Materialmischungen bei einem Schneidvorgang verschmieren und/oder sich an die Schneideinrichtung anheften würden.

Im Stand der Technik wurden vielfältige Anstrengungen unternommen, die vorgenannte Problematik zu lösen. So ist es bekannt, ein Formwerkzeug am Austritt des Extruders relativ lang auszubilden und mit einer Kühleinrichtung zu versehen. Durch ein derartiges relativ großes Formwerkzeug soll die Materialmischung vor Austritt aus dem Formwerkzeug so weit verfestigt werden, dass eine ausreichende Formstabilität gegeben ist. Eine derartige Vorrichtung ist jedoch nicht nur aufwendig, sondern die Verfestigung des Materiales noch vor Austritt aus der Extrusionsöffnung führt zwangsläufig zu einer Erhöhung des Extrusionsdruckes und damit der aufzubringenden Antriebsleistung.

Schließlich ist es bekannt, weitgehend flüssiges, stark adhäsives Extrudat nach Austritt aus einem Formwerkzeug des Extruders durch eine nachgeschaltete Kühl- oder Trocknungseinrichtung zu verfestigen. Eine derartige Vorrichtung ist beispielsweise aus der DE 23 39 193 B2 bekannt, bei der schmelzflüssiger Kunststoff aus einem Formwerkzeug nach unten abgezogen und durch eine Kühleinrichtung geführt wird. Ein Anheften der flüssigen Kunststoffmasse an Umlenkteilen wird durch Aufbringen eines Wasserfilmes zu verhindern versucht. Diese bekannten Vorrichtungen sind ebenfalls sehr aufwendig und führen zu einem entsprechend hohen Platzbedarf. Für die separaten Kühl- und Trocknungseinrichtungen ist ebenfalls eine nicht unerhebliche Energie aufzubringen.

Aus der EP 0 707 935 A geht ein kontinuierliches Verfahren zur Herstellung von bahnförmigen mikrozellulären Schaumstoffen aus amorphen thermoplastischen Kunststoffen hervor. Bei diesem bekannten Verfahren wird in einem Extruder eine Kunststoffschmelze mit einem flüchtigen Treibmittel imprägniert, welches sich im überkritischen Zustand befindet. Druck und Temperatur sind dabei so eingestellt, dass die Schmelze nach Austritt aus dem Extruder kontrolliert zu einer Schaumstoffbahn expandiert. Für die Ausbildung der mikrozellulären Schaumstruktur durch das expandierende Treibmittel muss der Kunststoff noch in gewissem Umfang weich und plastisch verformbar sein.

Ein entsprechendes Verfahren zur Herstellung von Schaumstoffen mit hoher Wärmeformbeständigkeit ist auch aus der EP 0 166 820 A bekannt.

Aus der EP 0 919 172 A ist ein Verfahren zur Herstellung von Teigprodukten in einem Extruder entnehmbar. Als eine bevorzugte Ausführungsform wird gelehrt, der Teigmasse in dem Extruder ein definiertes Gasvolumen zuzuführen. Die Zuführung eines Gases in einem überkritischen Zustand, d.h. in flüssiger Form wird in dieser Druckschrift nicht gelehrt.

Aus der DE 198 33 543 A ist ein Verfahren und eine Vorrichtung zum Extrudieren bekannt, wobei während des Extrusionsprozesses in den Extruder Gas in einem überkritischen Zustand zugeführt wird. Bei Austritt der Schmelze aus dem Extruder bewirkt das freiwerdende Gas eine Zerstäubung oder Zerkleinerung der Schmelze, wobei gleichzeitig eine Abkühlung und Kristallisation der Schmelze bewirkt wird. Zusammenfassend besteht im Stand der Technik daher ein Problem, dass bestimmte stark adhäsive und/oder schwer abbindende Materialmischungen wenn überhaupt nur mit aufwendigen Vorrichtungen im oder nach dem Formwerkzeug extrudiert werden können.

Der Erfindung liegt die **Aufgabe** zugrunde, ein Verfahren und eine Vorrichtung anzugeben, mit denen selbst zum Anheften und Verschmieren neigende Materialmischungen effizient granuliert werden können.

Die Aufgabe wird erfindungsgemäß mit einem Verfahren nach dem Patentanspruch 1 sowie einem Extruder nach dem Patentanspruch 8 gelöst. Bevorzugte Ausführungen der Erfindung sind in den abhängigen Ansprüchen angegeben.

Bei dem Verfahren ist vorgesehen, dass Druck und Temperatur der Mischung vor einem Austritt aus dem Extruder derart eingestellt werden, dass das überkritische Fluid bei Austritt aus dem Extruder unter Umgebungsbedingungen schlagartig von einem flüssigen Zustand in einen gasförmigen umgesetzt und dabei die Mischung definiert gekühlt und/oder getrocknet wird, dass durch die Kühlung und/oder Trocknung die extrudierte Mischung verfestigt und ein definierter Festigkeitszustand eingestellt wird und dass die verfestigte, extrudierte Mischung unmittelbar einer Weiterverarbeitung zugeführt wird.

Ein Grundgedanke der Erfindung besteht darin, die wesentliche Verfestigung des Extrusionsmaterials weder durch ein spezielles, gekühltes Formwerkzeug vor dem Austritt noch durch eine nachgeschaltete Trocknungseinrichtung nach dem Austritt durchzuführen. Vielmehr ist es mit dem erfindungsgemäßen Verfahren möglich, das Extrudat quasi bei Austritt aus dem Formwerkzeug schlagartig, in jedem Fall sehr kurzfristig auf einen gewünschten Festigungsgrad zu verfestigen. Dies wird nach der Erfindung dadurch erzielt, dass dem Material im Extruder ein überkritisches Fluid in flüssiger Phase zugeleitet wird, wobei das überkritische Fluid im Extruder noch weiter im flüssigen Zustand verbleibt. Dieses überkritische Fluid hat die Eigenschaft, bei einer definierten Herabsetzung des Druckes, wie es beim Austritt des Extrudats am Formwerkzeug erfindungsgemäß erfolgt, schlagartig in die gasförmige Phase überzugehen. Dieser schlagartige Übertritt in die gasförmige Phase kann zum einen aufgrund physikalischer Gesetzmäßigkeiten zu einer starken Abkühlung und damit zu einer Temperaturverringerung des Extrudates insgesamt führen. Diese Temperaturverringerung kann bis in einen Bereich unter 0°C eingestellt werden, so dass mit der Temperaturreduzierung eine definierte, zumindest zeitweise Verfestigung einsetzt. Statt oder ergänzend zur Verfestigung durch Temperaturreduzierung kann das austretende Gas weitere Flüssigkeit, insbesondere Wasser oder ein Lösungsmittel, aus dem Extrudat entfernen, so dass die Verfestigung maßgeblich oder zusätzlich durch Trocknung erfolgt. Als überkritisches Fluid wird ein Fluid verstanden, bei dem Druck und Temperatur im Bereich des kritischen Punktes eingestellt sind, an dem das Fluid Eigenschaften sowohl einer Flüssigkeit als auch eines Gases haben kann.

Ein weiterer Vorteil des erfindungsgemäßen Verfahrens ist darin zu sehen, dass das überkritische Fluid in dem Extruder als Fließverbesserer und Plastifizierungsmittel wirkt. Es können somit zum einen Materialien extrudiert werden, welche bisher aufgrund ihrer hohen Viskosität nicht oder zumindest nicht wirtschaftlich extrudierbar waren. Zum anderen reduziert sich durch die Zugabe des überkritischen Fluides die zur Plastifizierung notwendigen Flüssigkeitsmenge, insbesondere die Wasser- oder Lösungsmittelmenge, so dass die Materialmischungen bei einem viel geringeren Wassergehalt die zur Extrusion notwendige Plastizität erreichen. Dies reduziert einen nachgeschalteten Aufwand zur Trocknung erheblich.

Wird gemäß einer Ausführungsform der Erfindung CO₂ als überkritisches Fluid eingesetzt, kann eine Trocknung in vielen Fällen sogar ganz entfallen. Denn Kohlendioxid hat die Eigenschaft, beim Übertritt in die gasförmige Phase und beim Verlassen des Extrudates Wasser oder andere Lösungsmittel zu extrahieren und freizusetzen. Gerade Kohlendioxid unterstützt somit den Effekt der Verfestigung und Trocknung des Extrudates ganz erheblich. Weiterhin kann Kohlendioxid beim Einleiten in den Extruder als eine Trägerflüssigkeit zur Aufnahme von Geschmacks-, Aroma- und/oder Farbstoffen dienen, welche beim Übertritt in die gasförmige Phase des Kohlendioxides in der Materialmischung verbleiben. Bei CO₂ liegt der kritische Punkt bei etwa 30°C und 72 bar.

Eine weitere Verbesserung des Verfahrens wird erfindungsgemäß dadurch erreicht, dass Material in einem pulverförmigen Zustand in den Extruder eingeleitet und durch Zusatz des überkritischen Fluides und mindestens einer weiteren Flüssigkeit zu einer plastischen Masse verarbeitet wird. Dieses Verfahren ist insbesondere bei der Verarbeitung adhäsiver Materialien vorteilhaft. Denn im pulverförmigen Zustand können die Ausgangskomponenten noch sehr einfach und maßgenau zugeführt werden. Der für die Verarbeitung kritische adhäsive Zustand wird erst im Extruder durch die Beimengung der Flüssigkeit erreicht. Die Zugabe der Flüssigkeit kann aufgrund der Beimengung des überkritischen Fluides als ein zusätzliches Plastifizierungs- und Fließverbesserungsmittel bei einem sehr geringen Anteil gehalten werden, was die schnelle Verfestigung des Extrudats unterstützt.

Es ist erfindungsgemäß, dass das Material vor Austritt aus dem Extruder eine stark adhäsive Wirkung aufweist. Durch den erfindungsgemäßen Kühlungs- und/oder Trocknungseffekt wird das Adhäsionsverhalten des Materiales in dem gewünschten, notwendigen Maße reduziert. Dieser Trocknungsund Kühlungseffekt ist dabei umso stärker, je höher Druck und Temperatur des überkritischen Fluides in der Materialmischung sind.

Nach der Erfindung ist es vorgesehen, dass die extrudierte Mischung nach Durchtritt durch ein Formwerkzeug zur Herstellung von Granulat abgelängt wird. Die Ablängung kann unmittelbar durch ein rotierendes Schneidwerkzeug erfolgen, welches entweder unmittelbar am Formwerkzeug auf Kontakt anliegt oder in einem gewissen Abstand hierzu angeordnet ist.

Eine weitere Ausführungsform der Erfindung besteht darin, dass als Material ein Polymer, ein chemisches Produkt, insbesondere ein Wasch- oder Düngemittel, oder ein Nahrungsmittel eingesetzt wird. Insgesamt lässt sich das erfindungsgemäße Verfahren für eine Vielzahl von Materialien und Produkten einsetzen; welche bisher nicht oder kaum wirtschaftlich durch Extrusion verarbeitbar waren.

Ein ganz hervorragender Einsatz der Erfindung hat sich darin gezeigt, dass zur Herstellung von Nudeln das Material Proteine aufweist und dass das Material im Extruder durch Zugabe des überkritischen Fluides auf einer Temperatur von unter 50° gehalten wird.

Die Herstellung einer Nudelteigmasse in einem Extruder ist zwar grundsätzlich bekannt, jedoch ist diese mit den bekannten Verfahren nur mit speziellem Aufwand möglich. Ein Grund hierfür liegt darin, dass durch die mechanische Knetund Scherbeanspruchung im Extruder der Teig eine nicht unerhebliche Temperaturerhöhung erfährt. Jedoch darf der Nudelteig nicht über etwa 50°C erwärmt werden, da ansonsten das für die Festigkeit der Nudeln maßgebliche Protein- oder Glutengerüst irreparabel geschädigt wird. Während dies im Stand der Technik durch aufwendige Kühlvorrichtungen und/oder einen definiert unterfütternden Betrieb des Extruders erreicht wird, kann eine definierte Kühlung und Temperaturführung einer Nudelteigmasse durch die Zugabe des überkritischen Fluides in den Extruder erreicht werden. Dabei wird das überkritische Fluid so eingestellt, dass es bei Eintritt in den Extruder unter Beibehaltung der flüssigen Phase definiert expandiert. Eine solche Expansion einer Flüssigkeit bei Druckverringerung ist bei einem überkritischen Fluid möglich. Hierdurch wird dem umgebenden Material Wärme entzogen, so dass bei einer entsprechenden mengenmässigen Regulierung der Zuleitung des überkritischen Fluides eine definierte Temperatur des Nudelteiges unter 50°C einstellbar ist.

Bei der Verarbeitung von Nudelteig nach dem erfindungsgemäßen Verfahren besteht zudem ein weiterer Vorteil darin, dass nach Austritt aus dem Extruder die Nudelteigmasse bereits stark getrocknet ist, beispielsweise auf einen Wert von unter 25 %, insbesondere 15 % Restfeuchte. Die erreichte Trocknung ist für bestimmte Anwendungsfälle, etwa die Herstellung von Instant-Nudeln oder die direkte Weiterverarbeitung der Nudeln in Frittier- oder Kochanlagen bereits so ausreichend, dass keine weitere Trocknung erfolgen muss. Zudem bewirkt die Expansion des überkritischen Fluides in der ausextrudierten Nudelteigmasse eine porige Struktur, welche sowohl bei Instant-Nudeln als auch für besonders bekömmliche Diätnudeln gewünscht ist.

Eine besonders gezielte Kühlung der Materialmasse im Extruder wird erfindungsgemäß dadurch erzielt, dass das überkritische Fluid im Verlauf des Extruders an mehreren voneinander beabstandeten Stellen eingeleitet wird.

Das vorbeschriebene erfindungsgemäße Verfahren wird nach der Erfindung durch einen Extruder ausgeführt, welcher ein Gehäuse, mindestens eine angetriebene Extruderschnecke, ein Formwerkzeug an einer Austrittsöffnung sowie eine Zuführrichtung für ein überkritisches Fluid aufweist. Diese Zuführeinrichtung umfasst einen Druckbehälter zur Aufnahme des überkritischen Fluides, aus welchem über ein Ventil und über eine entsprechende Druckleitung das überkritische Fluid in den Extruder eingeleitet wird. Im Extruder sind die Extruderschneckenbereiche vor und nach einer Zuleitungsstelle des überkritischen Fluides so ausgebildet, dass die plastische Masse so verdichtet und unter Druck gesetzt wird, dass der Druck über dem Zuführdruck des überkritischen Fluides liegt. Dieser Druck kann bis zu 600 bar betragen.

Eine besonders gute Wirkung der Erfindung wird dadurch erreicht, dass der Extruder ein Mehrwellenextruder, insbesondere ein gegenläufig angetriebener Doppelwellenextruder ist. Bei einem gegenläufig angetriebenen Doppelwellenextruder wird eine besonders gute Durchmischung und Einarbeitung des überkritischen Fluides bei einem gleichmäßigen Austragsmuster an der Austragsöffnung des Extruders erreicht. Grundsätzlich kann jedoch auch ein Einwellenextruder sowie ein gleichlaufender Doppelwellenextruder eingesetzt werden.

Zur Herstellung von Granulat ist an der Austrittsöffnung des Extruders eine dem Formwerkzeug nachgeschaltete Schneideinrichtung angeordnet.

Durch die erfindungsgemäße Extrudatverfestigung, welche bei einem Kühlungs-/Gefriereffekt beim Austritt aus dem Extruder auch zeitabhängig ist, kann die mechanische Weiterverarbeitung, etwa ein Ablängen, unmittelbar anschließend erfolgen. Eine eventuell noch erforderliche Entfernung von Restfeuchte kann abschließend in energiesparender Weise am endbearbeiteten, beispielsweise abgelängten Produkt erfolgen.

## Patentansprüche

1. Verfahren zur Herstellung von Granulat aus einem Material, welches in einen Extruder eingeleitet und durch ein Formwerkezug an einer Austrittsöffnung des Extruders extrudiert wird, wobei das extrudierte Material unmittelbar nach Durchtritt durch das Formwerkzeug durch eine diesem nachgeordnete Schneideinrichtung zu dem Granulat abgelängt wird,
**dadurch gekennzeichnet,**
**dass** zusätzlich ein überkritisches Fluid in den Extruder eingeleitet und mit dem Material zu einer Mischung vermischt wird,
**dass** Druck und Temperatur der Mischung vor einem Austritt aus dem Extruder derart eingestellt werden, dass das überkritische Fluid bei Austritt aus dem Extruder unter Umgebungsbedingungen schlagartig von einem flüssigen Zustand in einen gasförmigen umgesetzt und
dabei die Mischung derart gekühlt und/oder getrocknet wird, dass durch die Kühlung und/oder Trocknung die extrudierte Mischung in einen schnittfesten Zustand verfestigt wird und
**dass** die verfestigte, extrudierte Mischung unmittelbar nach Durchtritt durch das Formwerkzeug zu dem Granulat abgelängt wird.

2. Verfahren nach Anspruch 1,
**dadurch gekennzeichnet,**
**dass** als überkritisches Fluid CO₂ eingesetzt wird.

3. Verfahren nach Anspruch 1 oder 2,
**dadurch gekennzeichnet,**
**dass** das Material in einem pulverförmigen Zustand in den Extruder eingeleitet und durch Zusatz des überkritischen Fluides und mindestens einer weiteren Flüssigkeit zu einer plastischen Masse verarbeitet wird.

4. Verfahren nach einem der Ansprüche 1 bis 3,
**dadurch gekennzeichnet,**
**dass** das Material vor Austritt aus dem Extruder eine stark adhäsive Wirkung aufweist.

5. Verfahren nach einem der Ansprüche 1 bis 4,
**dadurch gekennzeichnet,**
**dass** als Material ein Polymer, ein chemisches Produkt, insbesondere ein Wasch- oder Düngemittel, oder ein Nahrungsmittel eingesetzt wird.

6. Verfahren nach einem der Ansprüche 1 bis 5,
**dadurch gekennzeichnet,**
**dass** zur Herstellung von Nudeln das Material Proteine aufweist und dass das Material im Extruder durch Zugabe des überkritischen Fluides auf einer Temperatur von unter 50°C gehalten wird.

7. Verfahren nach einem der Ansprüche 1 bis 6,
**dadurch gekennzeichnet,**
**dass** das überkritische Fluid im Verlauf des Extruders an mehreren voneinander beabstandeten Stellen eingeleitet wird.

8. Extruder zur Durchführung des Verfahrens nach einem der Ansprüche 1 bis 7, mit einem Gehäuse, mindestens einer angetriebenen Extruderschnecke, einem Formwerkzeug an einer Austrittsöffnung sowie einer dem Formwerkzeug nachgeschalteten Schneideinrichtung,
**dadurch gekennzeichnet,**
**dass** eine Zuführeinrichtung zum Einleiten eines überkritischen Fluides in den Extruder vorgesehen ist.

9. Extruder nach Anspruch 8,
**dadurch gekennzeichnet,**
**dass** der Extruder ein Mehrwellenextruder, insbesondere ein gegenläufig angetriebener Doppelwellenextruder ist.

## Claims

1. Method for the production of granulate from a material, which is introduced into an extruder and is extruded by a mould at a discharge opening of the extruder, and, immediately after the passage of the extruded material through the mould, it is cut to a granulate by a cutting device positioned downstream thereof, **characterized in that** additionally a supercritical fluid is introduced into the extruder and mixed with the material to provide a mixture, that the pressure and temperature of the mixture are adjusted prior to discharge from the extruder in such a way that when the supercritical fluid leaves the extruder under ambient conditions it is suddenly transformed from a liquid state into a gaseous state and the mixture is cooled and/or dried in such a way that through the cooling and/or drying the extruded mixture is hardened into a cut-resistant state and that the hardened, extruded mixture is cut to granulate immediately after passage through the mould.

2. Method according to claim 1, **characterized in that** CO₂ is used as the supercritical fluid.

3. Method according to claim 1 or 2, **characterized in that** the material is introduced into the extruder in a pulverulent state and is processed to a plastic mass by adding the supercritical fluid and at least one further liquid.

4. Method according to one of the claims 1 to 3, **characterized in that** prior to its discharge from the extruder, the material has a highly adhesive action.

5. Method according to one of the claims 1 to 4, **characterized in that** the material is constituted by a polymer, a chemical product, particularly a detergent or fertilizer, or a foodstuff.

6. Method according to one of the claims 1 to 5, **characterized in that**, for the production of noodles, the material has proteins and that the material is kept in the extruder at a temperature below 50°C by adding the supercritical fluid.

7. Method according to one of the claims 1 to 6, **characterized in that** the supercritical fluid is introduced at several spaced points over the course of the extruder.

8. Extruder for performing the method according to one of the claims 1 to 7, with a casing, at least one driven extruder screw, a mould at a discharge opening and a cutting device downstream of the mould, **characterized in that** a supply device is provided for introducing a supercritical fluid into the extruder.

9. Extruder according to claim 8, **characterized in that** the extruder is a multishaft extruder, particularly a twin shaft extruder driven in opposition.

## Revendications

1. Procédé de fabrication de granulés à partir d'un matériau qui est introduit dans une extrudeuse et est extrudé à travers un outil de formage au niveau d'une ouverture de sortie de l'extrudeuse, le matériau extrudé étant coupé en longueur pour former le granulé immédiatement après le passage à travers l'outil de formage, par un dispositif de coupage placé après celui-ci,
***caractérisé***
***en ce qu***'en plus, un fluide supercritique est introduit dans l'extrudeuse et mélangé en un mélange avec le matériau,
***en ce que*** la pression et la température du mélange sont ajustées de telle manière avant une sortie de l'extrudeuse que le fluide supercritique, lors de la sortie de l'extrudeuse dans les conditions ambiantes, soit transformé d'un coup d'un état liquide à un état gazeux et le mélange est alors refroidi et/ou séché de telle manière que, du fait du refroidissement et/ou mélange, le mélange extrudé soit consolidé dans un état ferme à la coupe, et
***en ce que*** le mélange extrudé consolidé est immédiatement découpé en longueur pour former le granulé après le passage à travers l'outil de formage.

2. Procédé selon la Revendication 1, ***caractérisé en ce que*** l'on utilise du CO₂ comme fluide supercritique.

3. Procédé selon la Revendication 1 ou 2, ***caractérisé en ce que*** le matériau est introduit dans l'extrudeuse dans un état pulvérulent et est transformé en une masse plastique par ajout du fluide supercritique et d'au moins un autre liquide.

4. Procédé selon l'une quelconque des Revendications 1 à 3, ***caractérisé en ce que*** le matériau présente un effet fortement adhésif avant la sortie de l'extrudeuse.

5. Procédé selon l'une quelconque des Revendications 1 à 4, ***caractérisé en ce que*** l'on utilise comme matériau un polymère, un produit chimique, en particulier un détergent ou un engrais, ou un aliment.

6. Procédé selon l'une quelconque des Revendications 1 à 5, ***caractérisé en ce que,*** pour la fabrication de nouilles, le matériau comporte des protéines et ***en ce que*** le matériau est maintenu dans l'extrudeuse à une température inférieure à 50°C par ajout du fluide supercritique.

7. Procédé selon l'une quelconque des Revendications 1 à 6, ***caractérisé en ce que*** le fluide supercritique est introduit le long de l'extrudeuse en plusieurs endroits espacés les uns des autres.

8. Extrudeuse pour appliquer le procédé selon l'une quelconque des Revendications 1 à 7, avec un boîtier, au moins une vis d'extrudeuse entraînée, un outil de formage au niveau d'une ouverture de sortie ainsi qu'un outil de découpage placé après l'outil de formage, ***caractérisée en ce qu***'un dispositif d'alimentation est prévu pour introduire un fluide supercritique dans l'extrudeuse.

9. Extrudeuse selon la Revendication 8, ***caractérisée en ce que*** l'extrudeuse est une extrudeuse à plusieurs arbres, en particuliers une extrudeuse à deux arbres entraînés en sens inverse.
